# EUROPEAN PATENT APPLICATION

(11) **EP 4 361 938 A1**
(43) Date of publication of application: **01.05.2024**
(21) Application number: 22827105.2
(22) Date of filing: 30.03.2022
(51) Int. Cl.: G06Q 50/26

(54) **AUTOMATIC LOCKING METHOD AND APPARATUS FOR SMOKING SET IN PUBLIC PLACE, AND ELECTRONIC DEVICE**

(30) Priority: 25.06.2021 CN 202110708568
(71) Applicant: China Tobacco Hubei Industrial Corporation Limited, Dongxihu District Wuhan Hubei 430040 (CN)
(72) Inventor: HUANG, Ting, Wuhan, Hubei 430040 (CN); LIU, Huachen, Wuhan, Hubei 430040 (CN); TANG, Liangying, Wuhan, Hubei 430040 (CN); TAN, Jian, Wuhan, Hubei 430040 (CN); WU, Cong, Wuhan, Hubei 430040 (CN)
(74) Representative: Stellbrink & Partner Patentanwälte mbB
(86) International application number: PCT/CN2022/084119
(87) International publication number: WO 2022/267601

(57) **Abstract**

Disclosed in the present invention are an automatic locking method and apparatus for a smoking set in a public place, and an electronic device. The method comprises: when it is detected that the current position of a smoking set is within the range of a public place, generating first control information, and sending same to the smoking set, wherein the first control information is used for controlling the smoking set to lock a heating module; when it is detected that the current position is not within the range of the public place, generating second control information, and sending same to the smoking set, wherein the second control information is used for controlling the smoking set to unlock the heating module; and after the heating module is unlocked, sending prompt information to a preset terminal, wherein the prompt information is used for indicating that the smoking set has been unlocked. By means of the present invention, a heating module of a smoking set is automatically controlled to be locked in a public place, such that the use of the smoking set is automatically paused, the smoking control requirement of the public place is met, and a smoking control behavior of a user himself/herself can also be standardized.

## Description

This application claims priority to Chinese Patent Application No. 202110708568.9, titled "AUTOMATIC LOCKING METHOD AND APPARATUS FOR SMOKING SET IN PUBLIC PLACE, AND ELECTRONIC DEVICE ", filed on June 25, 2021 with the China National Intellectual Property Administration, which is incorporated herein by reference in its entirety.

### FIELD

The present disclosure relates to the intelligent smoke control technology and in particular to an automatic locking method, device and electronic apparatus for a smoking set in public place.

### BACKGROUND

With a gradual expansion of the scope of the national smoking ban, due to an excellent harm reduction level, low-temperature heat-not-burn tobacco products have become a new choice for many users.

### SUMMARY

### Technical problems

However, the low-temperature heat-not-burn tobacco products will also produce a large amount of smoke and a strong smell of smoke during being smoked, which still interferes with the normal order of public places. Nevertheless, due to human resource and energy factors, the efficiency of manual control of smoking in public places is low, and the control effect is not good.

### The solution to the technical problems

In order to solve the above problems, the embodiments of the present application provide an automatic locking method, device and electronic apparatus for a smoking set in public place.

In a first aspect, the embodiment of the present application provides an automatic locking method for smoking set in public place, the method comprising:
when detecting that a current location of a smoking set is within a range of a public place, generating and sending first control information to the smoking set, wherein the first control information is configured to control the smoking set to lock a heating module;
after detecting that a current location of the smoking set is out of the range of the public place, generating and sending second control information to the smoking set, wherein the second control information is configured to control the smoking set to unlock the heating module;
after the heating module is unlocked, sending a prompt message to a preset terminal, wherein the prompt message is configured to indicate that the smoking set has been unlocked.

In an embodiment, before generating and sending the first control information to the smoking set when detecting that the current location of the smoking set is within the range of a public place, the method further comprises:
acquiring a map information within a first preset range with the smoking set as a center of circlre, and querying public places in the map information;
determining a range of the public place when there is a public place in the map information;
acquiring a current location of the smoking set, and judging whether the current location is within the range of the public place.

In an embodiment, after generating and sending the first control information, the first control information is configured to control the smoking set to lock the heating module, to the smoking set when detecting that the current location of the smoking set is within the range of a public place, the method further comprises:
acquiring public place information corresponding to the range of the public place, and determining whether there is a smoking area within the range of the public place based on the public place information;
after determining that there is the smoking area within the range of the public place, generating and sending third control information to the smoking set when detecting that the smoking set is in the smoking area, where the third control information is configured to control the smoking set to unlock the heating module in the smoking area.

In an embodiment, the detecting that the smoking set is in the smoking area comprises:
acquiring a smoking area azimuth information embedded in a location identification chip provided in the public place, wherein the smoking area azimuth information comprises a first distance between the location identification chip and the smoking area, and a first azimuth degree of the smoking area relative to the location identification chip;
calculating a second distance between the smoking set and the location identification chip, and calculating a second azimuth degree of the smoking set relative to the location identification chip;
when both the second distance and the second azimuth degree match with the smoking area azimuth information at the same time, determining that the smoking set is in the smoking area.

In an embodiment, the method also comprises:
acquiring a unique identification code of the range of the public place, and recording a residence time information of the smoking set within the range of the public place, wherein the residence time information comprises a length of residence time and a residence time period of the smoking set within the range of the public place;
when the current location of the smoking set has been within the range of the public place corresponding to the unique identification code for at least twice, and the difference between the residence time information recorded each time is less than a preset error value, marking the range of the public place as a frequently-used range and calculating average residence time information of the frequently-used range;
when the current location of the smoking set is within the frequently-used range again, controlling the smoking set to lock heating module based on the average residence time information.

In an embodiment, after controlling the smoking set to lock the heating module based on the average residence time information when the current location of the smoking set is within the frequently-used range again, the method further comprises:
when receiving the unlock request sent by the preset terminal, acquiring the current location of the smoking set;
if the current location is out of the range of the public place, sending the second control information to the smoking set.

In a second aspect, the embodiment of the present application provides an automatic locking device for the smoking set in public place, the device comprises:
a first detecting module, configured to generate and send first control information to the smoking set when detecting that the current location of the smoking set is within the range of a public place, wherein the first control information is configured to control the smoking set to lock the heating module;
a second detecting module, configured to generate and send second control information to the smoking set after detecting that the current location is out of the range of the public place, wherein the second control information is configured to control the smoking set to unlock the heating module;
a prompt module, configured to send a prompt message to a preset terminal after the heating module is unlocked, wherein the prompt message is configured to indicate that the smoking set has been unlocked.

In a third aspect, an embodiment of the present application provides an electronic apparatus, comprising a memory, a processor, and a computer program stored in the memory and running on the processor, and the processor is configured to implementsteps of the method provided by the first aspect or any possible implementation manner of the first aspect when executing the computer program.

In a fourth aspect, an embodiment of the present application provides a computer-readable storage medium, on which a computer program is stored, and when the computer program is executed by a processor, the method provided by the first aspect or any possible implementation manner of the first aspect is implemented.

### Advantageous technical effects

The beneficial advantages of the present application are as follows:
1. based on the current location of the smoking set, it can automatically detect whether the smoking set is within the range of a public place, and then automatically control the heating module of the smoking set to be locked in the public place, and the smoking set can be automatically suspended, which meets the requirements for smoking control in public places and can also regulate the smoking control behavior of users themselves.
2. it can automatically implement smoking-control to the smoking set without additional manpower and material resources, and thus the control efficiency is high.

### BRIEF DESCRIPTION OF THE DRAWINGS

In order to more clearly illustrate the technical solutions in the embodiments of the present application, the following will briefly introduce the accompanying drawings used in the embodiments. Obviously, the accompanying drawings in the following description are only some embodiments of the present application. For those of ordinary skill in the art can also obtain other drawings based on these drawings without making creative efforts.
Figure 1 is a schematic flowchart of an automatic locking method for a smoking set in a public place provided by an embodiment of the present application;
Figure 2 is a schematic structural diagram of an automatic locking device for a smoking set in a public place provided by the embodiment of the present application;
Figure 3 is a schematic structural diagram of an electronic apparatus provided by an embodiment of the present application.

### DETAILED DESCRIPTION OF EMBODIMENTS

The technical solutions in the embodiments of the present application will be clearly and completely described below in conjunction with the drawings in the embodiments of the present application.

In the following introduction, the terms "first" and "second" are only used for the purpose of description, and should not be understood as indicating or implying relative importance. The following introduction provides multiple embodiments of the present application, and different embodiments can be replaced or combined and combined, so the present application can also be considered to include all possible combinations of the same and/or different embodiments described. Thus, if one embodiment contains features A, B, C, and another embodiment contains features B, D, then the application should also be considered to include all other possible combinations containing one or more of A, B, C, D, although this embodiment may not be clearly written in the following content.

The following description provides examples, and does not limit the scope, applicability or examples set forth in the claims. Changes may be made in the function and arrangement of described elements without departing from the scope of the disclosure. Various examples may omit, substitute, or add various procedures or components as appropriate. For example, the methods described may be performed in an order different from that described, and various steps may be added, omitted, or combined. Furthermore, features described with respect to some examples may be combined into other examples.

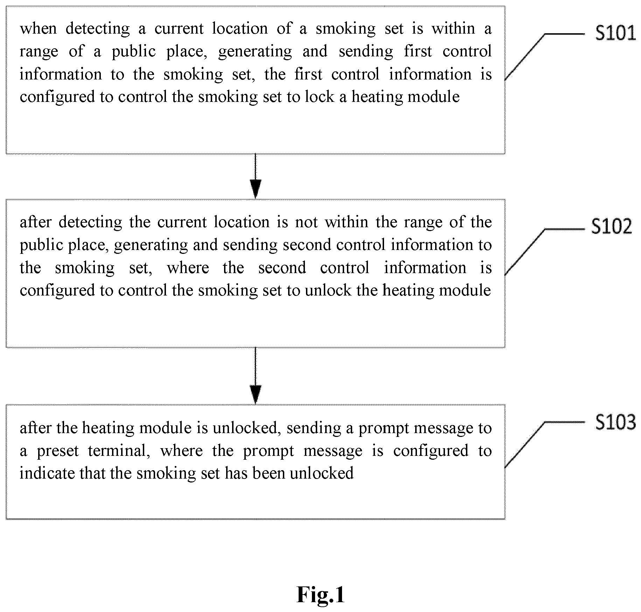

Referring to FIG. 1, FIG. 1 is a schematic flowchart of an automatic locking method for a smoking set in public places provided by an embodiment of the present application. In the embodiment of this application, the method comprises:
S101, when detecting that the current location of the smoking set is within a range of a public place, generating and sending first control information to the smoking set, where the first control information is configured to control the smoking set to lock the heating module.

The subject of execution of this application can be a cloud server.

In one embodiment of the present application, the current location of the smoking set can be monitored. The specific monitoring method can be GPS positioning by a positioning module in the smoking set, GPS positioning based on a mobile phone binding the smoking set, and so on. When it is detected that the current location of the smoking set is within the range of a public place, it is considered that the environment where the smoking set is located is a public place, and it is necessary to prevent the smoking set from generating smoke. Generally, low-temperature heat-not-burn tobacco products may have a plurality of functions, while the way to generate smoke is to heat the internal glycerin and then smoke precipitates by the heating module in the smoking set. Therefore, the cloud server can generate the first control information and send the first control information to the smoking set, so as to control the smoking set to lock the heating module used for burning and generating smoke, so that other functions of the smoking set can be in normal, only except the generation of the smoke and smoke smell.

In an embodiment, before step S101, the method further comprises:
acquiring a map information within a first preset range with the smoking set as a center of circle, and querying public places in the map information;
when a public place exists in the map information, determining a corresponding range of the public place;
acquiring the current location of the smoking set, and judging whether the current location is within the range of the public place.

In the embodiment of the present application, the map information within the first preset range (for example, within 3 kilometers) around the smoking set can be acquired with the smoking set as the center of circle. The map information can be downloaded and read from the Internet, or acquired from offline maps downloaded in advance. Since the map information inevitably includes information such as surrounding merchants, business districts, and buildings, etc., it is possible to determine public places among them by querying the map information. When it is determined that a public place exists in the currently acquired map information, the range of the public place can be further determined according to the map information, and the current location of the smoking set can be acquired according to GPS positioning and other methods, and the current location can be compared with the range of the public place to determine whether the current location is within the range of the public place.

In one embodiment, after the step S101, the method also comprises:
acquiring the public place information corresponding to the range of the public place, and determining whether there is a smoking area within the range of the public place based on the public place information;
after determining that there is a smoking area within the range of the public place, when detecting that the smoking set is in the smoking area, generating and sending third control information to the smoking set, where the third control information is configured to control the smoking set in the smoking area to unlock the heating module.

In an embodiment of the present application, for some public places, not the entire area of the public place is non-smoking, and there may be smoking areas in the public places. Therefore, when the smoking set is within the range of a certain public place, the public place information corresponding to the range of the public place can be acquired, and the public place information may include information such as the division of each area of the public place, the entire structural layout, and the like. According to the acquired public place information, it can be determined whether there is a smoking area in the public place. If a smoking area exists in the public place where the smoking set is located, the third control information can be generated in case of detecting that the smoking set is in the smoking area, and the third control information can be sent to the smoking set to control it so as to unlock the heating module in the smoking area.

In one embodiment, the step of detecting that the smoking set is in the smoking area comprises:
acquiring an azimuth information of the smoking area embedded in the location identification chip set provided in the public place, where the azimuth information of the smoking area comprises a first distance between the location identification chip and the smoking area, and a first azimuth degree of the smoking area relative to the location identification chip;
calculating a second distance between the smoking set and the location identification chip, and calculating a second azimuth degree of the smoking set relative to the location identification chip;
when the second distance and the second azimuth degree match with the smoking area azimuth information at the same time, determining that the smoking set is in the smoking area.

In the embodiment of the present application, the location identification chip can be regarded as a chip installed in various public places for identify and positioning of the smoking sets in order to implement the smoking ban.

In one embodiment of the present application, it should be noted that the GPS map positioning method is not very accurate, and the range of the public places may be narrow, and the GPS signal in the shopping mall is not stable enough, so it is not appropriate to keep judging the smoking area by the map positioning of the current location of the smoking set. Therefore, the present application can be provided with location identification chips in public places. Since the position of the location identification chip is fixed in the public places, the relative position and the relative azimuth between the smoking area and the location identification chip in the public place are also fixed. The location identification chip can pre-store the azimuth information of the smoking area, that is, the first distance and the first azimuth degree between the location identification chip and the smoking area are stored. After calculating the second distance and the second azimuth degree between the smoking set and the location identification chip, to match the second distance and the second azimuth degree with the azimuth information of the smoking area is implemented. If the first distance and the first azimuth degree match, the smoking set is considered to be within the smoking area.

S 102, after detecting that the current location is not within the range of the public place, generating and sending second control information to the smoking set, where the second control information is configured to control the smoking set to unlock the heating module.

In the embodiment of the present application, after detecting that the current location of the smoking set is out of the range of the public place, it is considered that the user has brought the smoking set out of the range of the public place. At this time, the cloud server can generate and send the second control information to the smoking set to control the smoking set to unlock the heating module.

S103, after the heating module is unlocked, sending a prompt message to a preset terminal, where the prompt message is configured to indicate that the smoking set has been unlocked.

In the embodiment of the present application, the preset terminal can be regarded as a relevant message receiving terminal preset by the user and corresponding to the smoking set. The preset terminal can be a mobile phone terminal or a tablet PC, etc.

In the embodiment of the present application, because the user has less accurate understanding to the range of the public place, and in some cases the user temporarily leaves the public place in order to be able to smoke, after the heating module is unlocked, a prompt message will be sent to the preset terminal to promptly remind the user that the smoking set has been unlocked.

In one embodiment, the method further comprises:
acquiring a unique identification code of the range of the public place, and recording the residence time information of the smoking set within the range of the public place. The residence time information comprises the length of residence time and the residence time period of the smoking set within the range of the public place;
when the current location of the smoking set has been within the range of the public place corresponding to the unique identification code for at least twice, and the difference between the residence time information recorded of each time is less than a preset error value, marking the range of the public place as a frequently-used range and calculating average residence time information of the frequently-used range;
when the current location of the smoking set is within the frequently-used range again, controlling the smoking set to lock the heating module based on the average residence time information.

In the embodiment of the present application, the unique identification code can be regarded as a unique identification code for each public place to distinguish public places.

In the embodiment of the present application, the corresponding unique identification code can be acquired for the range of public places that the smoking set has entered, so as to judge whether the smoking set has ever entered the range of the public place when the smoking set enters the range of the public place in next time. After the unique identification code has been acquired, the residence time information can be generated and recorded based on the length of the residence time and the residence time period of the smoking set in the public place in this time. The cloud server can compare the residence time information recorded in each time after the current location of the smoking set has been within the range of the public place corresponding to the same unique identification code for at least twice. If the difference between the residence time information is within the preset range of the error value, it is considered that the user has a habit of going to a specific public place within a specific time period and staying for a specific length of time. At this time, the range of this public place is marked as a frequently-used range, and the average residence time information is calculated according to the residence time information recorded each time. When the user enters this public place again with the smoking set, the smoking set can be directly controlled to lock the heating module based on the average residence time information. For example, if a user is used to wandering in a shopping mall for one hour at 7:00 p.m., when the user goes to the shopping mall again at 7:00 p.m., the smoking set can be directly controlled to lock the heating module for one hour.

In one embodiment, after controlling the smoking set to lock the heating module based on the average residence time information when the current location of the smoking set is within the frequently-used range again, the method further comprises:
when receiving a unlock request sent by the preset terminal, acquiring the current location of the smoking set;
if the current location is out of the range of the public place, sending the second control information to the smoking set.

In the embodiment of the present application, although the above-mentioned situation in which the smoking set is within the frequently-used range is dealt with according to the user's habit, which simplifies the control process of the smoking set within the frequently-used range, the user may leave that frequently-used range in advance due to unexpected situations. In order to unlock the smoking set, the user can send an unlock request by the preset terminal. After receiving the unlock request, the cloud server will first acquire the current location of the smoking set for judgement, and then the second control information can be sent to the smoking set so as to control the smoking set to unlock the heating module, as long as the current location of the smoking set is out of the range of a public place,.

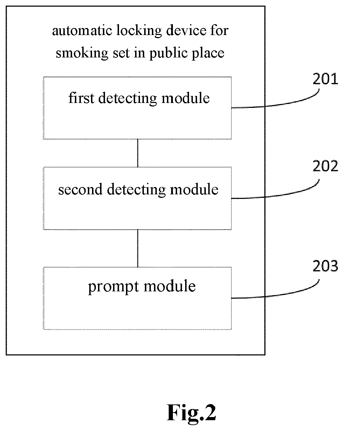

Referring to Figure 2, the automatic locking device for smoking sets in public places provided by the embodiment of the present application will be described in detail below. It should be noted that the automatic locking device for smoking sets in public places shown in Figure 2 is configured to implement the method of the embodiment shown in Figure 1 of the present application. For technical details not disclosed, please refer to the embodiment shown in FIG. 1 of this application.

Referring to Figure 2, Figure 2 is a schematic structural diagram of an automatic locking device for smoking sets in public places provided by an embodiment of the present application. As shown in Figure 2, the device comprises:
a first detecting module 701, configured to generate and send first control information to the smoking set when detecting that the current location of the smoking set is within the range of a public place, wherein the first control information is configured to control the smoking set to lock the heating module;
a second detecting module 702, configured to generate and send second control information to the smoking set after detecting that the current location is out of the range of the public place any more, wherein the second control information is configured to control the smoking set to unlock the heating module;
a prompt module 703, configured to send a prompt message to a preset terminal after the heating module is unlocked, the prompt message is configured to indicate that the smoking set has been unlocked.

In one embodiment, the device also comprises:
a map information acquisition module, configured to acquire a map information within a first preset range with the smoking set as a center of circle, and query public places in the map information;
a range determination module, configured to determine the range of the public place when a public place exists in the map information;
a judging module, configured to acquire the current location of the smoking set, and judge whether the current location is within the range of the public place.

In one embodiment, the device further comprises:
a smoking area determining module, configured to acquire a public place information corresponding to the range of the public place, and determine whether there is a smoking area within the range of the public place based on the public place information;
a detection module, configured to generate and send third control information to the smoking set when detecting that the smoking set is in the smoking area after determining that there is the smoking area within the range of the public place, and the third control information is configured to control the smoking set to unlock the heating module in the smoking area.

In one embodiment, the detection module comprises:
a smoking area azimuth information acquisition unit, configured to acquire the smoking area azimuth information embedded in the location identification chip set provided in the public place, and the smoking area azimuth information comprises a first distance between the location identification chip and the smoking area, a first azimuth degree of the smoking area relative to the location identification chip;
a calculation unit, configured to calculate a second distance between the smoking set and the location identification chip, and calculate a second azimuth degree of the smoking set relative to the location identification chip;
a matching unit, configured to determine that the smoking set is in the smoking area when both the second distance and the second azimuth degree both match with the azimuth information of the smoking area at the same time.

In one embodiment, the device further comprises:
a unique identification code acquisition module, configured to acquire a unique identification code of the range of the public place, and record the residence time information of the smoking set within the range of the public place, the residence time information includes a length of residence time and a residence time period of the smoking set within the range of the public place;
a recording module, configured to mark the range of the public place as a frequently-used range and calculate an average residence time information of the frequently-used range when the current location of the smoking set has been within the range of the public place corresponding to the unique identification code for at least twice and the difference between the residence time information recorded each time is less than a preset error value;
a locking module, configured to control the smoking set to lock the heating module based on the average residence time information when the current location of the smoking set is within the frequently-used range again.

In one embodiment, the device also comprises:
a receiving module, configured to acquire the current location of the smoking set when receiving a unlock request sent by the preset terminal;
a sending module, configured to send second control information to the smoking set if the current location is out of the range of the public place.

Those skilled in the art can clearly understand that the technical solutions of the embodiments of the present application can be implemented by means of software and/or hardware. "Unit" and "module" in this specification refer to software and/or hardware that can perform specific functions independently or in cooperation with other components, where the hardware can be, for example, Field Programmable Gate Array (FPGA) , Integrated Circuit (IC), etc.

Each processing unit and/or module in the embodiment of the present application can be implemented by an analog circuit for realizing the functions described in the embodiments of the present application, or can be implemented by software for performing the functions described in the embodiments of the present application.

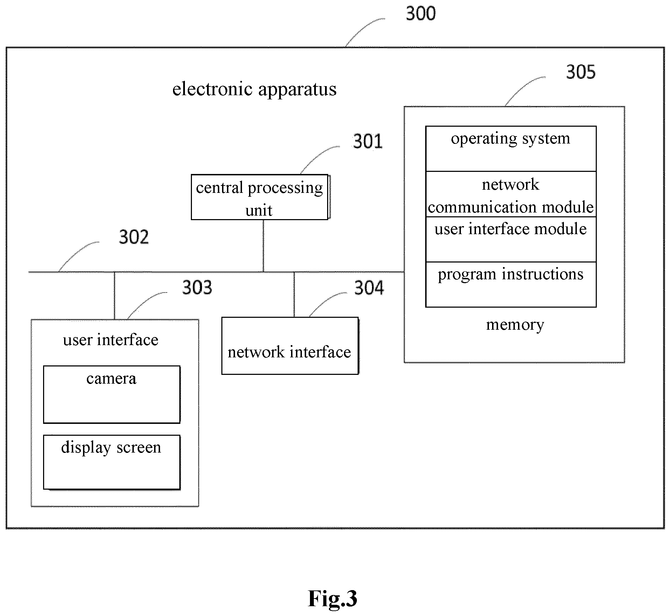

Referring to Figure 3, Figure 3 shows a schematic structural diagram of an electronic apparatus involved in an embodiment of the present application, and the electronic apparatus can be used to implement the method in the embodiment shown in Figure 1. As shown in Figure 3, the electronic apparatus 300 may comprise: at least one central processing unit 301, at least one network interface 304, a user interface 303, a memory 305, and at least one communication bus 302.

The communication bus 302 is configured to implement a connection and communication between these components.

The user interface 303 may include a display screen (Display) and a camera (Camera). Optionally, the user interface 303 may further include a standard wired interface and a standard wireless interface.

Optionally, the network interface 304 may include a standard wired interface and a standard wireless interface (such as a WI-FI interface).

The central processing unit 301 may include one or more processing cores. The central processing unit 301 connects various parts of the entire electronic apparatus 300 by various interfaces and lines, and executes various functions of the terminal 300 and process data by running or executing instructions, programs, code sets or instruction sets stored in the memory 305 and calling data stored in the memory 305. Optionally, the central processing unit 301 can adopt at least one hardware form of digital signal processing (DSP), filed-programmable gate array (FPGA), programmable logic array (PLA). The central processing unit 301 can integrate one or a combination of a central processing unit (CPU), a graphics processing unit (GPU) and a modem. Among them, the CPU mainly execute the operating system, user interface and application programs, etc.; the GPU is configured to render and draw the content that needs to be displayed on the display screen; the modem is used to process wireless communication. It can be understood that, the above-mentioned modem may not be integrated into the central processing unit 301, but may be realized by a single chip.

The memory 305 may include a random access memory (RAM), and may also include a read-only memory. Optionally, the memory 305 includes a non-transitory computer-readable storage medium. The memory 305 can be configured to store instructions, programs, codes, sets of codes, or sets of instructions. The memory 305 can include a program storage area and a data storage area, where the program storage area can store instructions for implementing an operating system, instructions for at least one function (such as a touch function, a sound playback function, an image playback function, etc.), instructions for implementing the above method of the embodiments; the storage data area can store the data involved in the above method of the embodiments. Optionally, the memory 305 can also be at least one storage device located away from the aforementioned central processing unit 301. As shown in FIG. 3, the memory 305 as a computer storage medium may include an operating system, a network communication module, a user interface module, and program instructions.

In the electronic apparatus 300 shown in Figure 3, the user interface 303 is mainly configured to provide the user with an input interface and acquire the data input by the user; and the central processing unit 301 can be used to call the automatic locking application program of smoking sets in public places stored in the memory 305, and specifically implement following operations:
when detecting that the current location of the smoking set is within the range of a public place, generating and sending first control information to the smoking set, where the first control information is configured to control the smoking set to lock the heating module;
after detecting that the current location is out of the range of the public place, generating and sending second control information to the smoking set, where the second control information is configured to control the smoking set to unlock the heating module;
after the heating module is unlocked, a prompt message is sent to a preset terminal, and the prompt message is configured to indicate that the smoking set has been unlocked.

The present application also provides a computer-readable storage medium in which a computer program is stored, and when the program is executed by a processor, the steps of the above method is implemented. The computer-readable storage medium may include, but is not limited to, any type of disk, including floppy disk, optical disk, DVD, CD-ROM, micro drive, and magneto-optical disk, ROM, RAM, EPROM, EEPROM, DRAM, VRAM, flash memory device, magnetic or optical cards, nanosystems (including molecular memory ICs), or any type of medium or device suitable for storing instructions and/or data.

It should be noted that for the foregoing method embodiments, for the sake of simple description, they are expressed as a series of action combinations, but those skilled in the art should know that the present application is not limited by the described action sequence. Depending on the application, certain steps may be performed in other orders or simultaneously. Secondly, those skilled in the art should also know that the embodiments described in the specification belong to preferred embodiments, and the actions and modules involved are not necessary in this application.

In the foregoing embodiments, the descriptions of each embodiment have their own emphases, and for parts not described in detail in a certain embodiment, refer to related descriptions of other embodiments.

In the several embodiments provided in this application, it should be understood that the disclosed device can be implemented in other ways. For example, the device embodiments described above are only illustrative, for example, the division of the units is only a logical function division, there may be other division methods in actual implementation. For example, multiple units or components can be combined or can be integrated into another system, or some features may be ignored, or not implemented. In another point, the mutual coupling or direct coupling or communication connection shown or discussed may be the indirect coupling or communication connection through some service interfaces, devices or units, may be in electrical or other forms.

The units described as separate components may or may not be physically separated, and the components shown as units may or may not be physical units, that is, they may be located in one place, or may be distributed to multiple network units. Part or all of the units can be selected to achieve the purpose of the solution of this embodiment according to actual needs.

In addition, each functional unit in each embodiment of the present application may be integrated into one processing unit, each unit may exist separately physically, or two or more units may be integrated into one unit. The above-mentioned integrated units can be implemented in the form of hardware or in the form of software functional units.

If the integrated unit is realized in the form of a software function unit and sold or used as an independent product, it can be stored in a computer-readable memory. Based on this understanding, the technical solution of the present application in essentially or part of the contribution to the prior art, or all or part of the technical solution can be embodied in the form of a software product, and the computer software product is stored in a memory. Several instructions are included to make a computer device (which may be a personal computer, server or network device, etc.) execute all or part of the steps of the methods described in the various embodiments of the present application. The above-mentioned memory includes: U disk, read-only memory (ROM), random access memory (RAM), mobile hard disk, magnetic disk or optical disk, and other media capable of storing program codes.

Those of ordinary skill in the art can understand that all or part of the steps in the various methods of the above-mentioned embodiments can be completed by instructing related hardware through a program. The program can be stored in a computer-readable memory, and the memory can include: flash memory disk, read-only memory (ROM), random access device (RAM), magnetic disk or optical disk, etc.

What is described above is only an exemplary embodiment of the present disclosure, and should not limit the scope of the present disclosure. That is, all equivalent changes and modifications made according to the teachings of the present disclosure still fall within the scope of the present disclosure. Embodiments of the present disclosure will be readily apparent to those skilled in the art from consideration of the specification and practice of the disclosure herein. This application is intended to cover any modification, use or adaptation of the present disclosure, and these modifications, uses or adaptations follow the general principles of the present disclosure and include common knowledge or conventional technical means in the technical field not described in the present disclosure. The specification and examples are to be considered exemplary only, with the scope and spirit of the present disclosure defined by the claims.

## Claims

1. An automatic locking method for smoking set in public place, comprising:
generating and sending first control information to the smoking set on detecting that a current location of a smoking set is within a range of a public place, wherein the first control information is to control the smoking set to lock a heating module;
generating and sending second control information to the smoking set after detecting that the current location of the smoking set is out of the range of the public place, wherein the second control information is to control the smoking set to unlock the heating module;
sending a prompt message to a preset terminal after the heating module is unlocked, wherein the prompt message is to indicate that the smoking set has been unlocked.

2. The method according to claim 1, wherein, before generating and sending the first control information to the smoking set when detecting that the current location of the smoking set is within the range of the public place, the method further comprises:
acquiring map information within a first preset range which is a circle with the smoking set as a center of the circle, and querying the public place in the map information;
determining the range of the public place when the public place exists in the map information; and
acquiring the current location of the smoking set, and determining whether the current location is within the range of the public place.

3. The method according to claim 1, wherein, after generating and sending the first control information, which is to control the smoking set to lock the heating module, to the smoking set when detecting that the current location of the smoking set is within the range of a public place, the method further comprises:
acquiring public place information corresponding to the range of the public place, and determining whether there is a smoking area within the range of the public place based on the public place information;
generating and sending, after determining that there is the smoking area within the range of the public place, third control information to the smoking set when detecting that the smoking set is in the smoking area, wherein the third control information is to control the smoking set to unlock the heating module in the smoking area.

4. The method according to claim 3, wherein the step of detecting that the smoking set is in the smoking area comprises:
acquiring smoking area azimuth information embedded in a location identification chip provided in the public place, wherein the smoking area azimuth information comprises a first distance between the location identification chip and the smoking area, and a first azimuth degree of the smoking area relative to the location identification chip;
calculating a second distance between the smoking set and the location identification chip, and calculating a second azimuth degree of the smoking set relative to the location identification chip;
determining that the smoking set is in the smoking area when both the second distance and the second azimuth degree match with the smoking area azimuth information at the same time.

5. The method according to claim 1, further comprising:
acquiring a unique identification code of the range of the public place, and recording residence time information of the smoking set within the range of the public place, wherein the residence time information comprises a length of residence time and a residence time period of the smoking set within the range of the public place;
marking the range of the public place as a frequently-used range and calculating average residence time information of the frequently-used range when the current location of the smoking set has been within the range of the public place corresponding to the unique identification code for at least twice and a difference between the residence time information recorded each time is less than a preset error value;
controlling the smoking set to lock the heating module based on the average residence time information when the current location of the smoking set is within the frequently-used range again.

6. The method according to claim 5, wherein, after controlling the smoking set to lock the heating module based on the average residence time information when the current location of the smoking set is within the frequently-used range again, the method further comprises:
acquiring the current location of the smoking set when receiving a unlock request sent by the preset terminal;
sending the second control information to the smoking set if the current location of the smoking set is out of the range of the public place.

7. An automatic locking device for smoking set in public place, comprising:
a first detecting module, configured to generate and send first control information to a smoking set when detecting that a current location of the smoking set is within a range of a public place, wherein the first control information is to control the smoking set to lock a heating module;
a second detecting module, configured to generate and send second control information to the smoking set after detecting that the current location is not within the range of the public place, wherein the second control information is to control the smoking set to unlock the heating module;
a prompt module, configured to send a prompt message to a preset terminal after the heating module is unlocked, wherein the prompt message is to indicate that the smoking set has been unlocked.

8. An electronic apparatus, comprising: a memory, a processor, and a computer program stored in the memory and running on the processor, wherein the processor is configured to implement steps of the method according to any one of claims 1-6 when executing the computer program.

9. A computer-readable storage medium, a computer program is stored thereon, wherein, when the computer program is executed by a processor, steps of the method according to any one of claims 1-6 are implemented.
